# FASCICULE DE BREVET EUROPEEN

(11) **EP 0 610 637 B1**
(45) Date de publication et mention de la délivrance du brevet: **11.08.1999**
(21) Numéro de dépôt: 93402968.7
(22) Date de dépôt: 09.12.1993
(51) Int. Cl.: B01D 71/38, F16J 3/02

(54) **Membrane élastique imperméable**
Elastische, undurchlässige Membran
Elastic impermeable membrane

(30) Priorité: 13.01.1993 FR 9300252
(43) Date de publication de la demande: 17.08.1994
(73) Titulaire: AUTOMOBILES PEUGEOT, 75116 Paris (FR); AUTOMOBILES CITROEN, 92200 Neuilly-sur-Seine (FR)
(72) Inventeur: Le Rossignol, Benoît, F-35000 Rennes (FR)
(74) Mandataire: Robert, Jean-François

(56) Documents cités:
- EP-A- 0 360 648
- EP-A- 0 482 916
- FR-A- 2 662 638
- PATENT ABSTRACTS OF JAPAN vol. 013, no. 287 (M-844) 30 Juin 1989 & JP-A-01 079 438 (DAINIPPON PRINTING CO LTD) 24 Mars 1989
- C.A.FINCH: "Polyvinyl Alkohol" , , JOHN WILEY & SONS LTD, PAGES 352-383, 523-528; 1973

## Description

L'invention concerne une membrane élastique imperméable du genre de celles oui équipent les accumulateurs hydropneumatiques, pour séparer un compartiment gaz et un compartiment liquide.

Le brevet EP0360648 décrit une telle membrane et en particulier une membrane sandwich, composée d'un film en matériau étanche aux gaz préférentiellement en alcool polyvinylique, compris entre deux couches d'un matériau élastique tel qu'un polyuréthane.

Les films d'alcool polyvinylique utilisés notamment dans le domaine de l'emballage sont obtenus par laminage sous une épaisseur allant de 25 à 100 microns. Ces films ne sont pas suffisamment résistants pour servir à confectionner une membrane d'accumulateur hydropneumatique fonctionnant à des pressions de l'ordre de 200.10⁵ Pa (200 bars).

Pour réaliser des films d'épaisseur satisfaisante, de l'ordre de 450 à 1400 µm, on procède par doublages successifs en laminant une pluralité de films fins comme cela est mentionné dans le brevet EP0482916.

D'autre part, on sait que les films de forte épaisseur d'alcool polyvinylique partiellement hydrolysé généralement utilisés, obtenus par laminage ou par extrusion, sont poreux en raison des dégagements de matières volatiles provoqués par l'échauffement en milieu non anhydre.

Les dégagement gazeux se produisent selon le mécanisme ci-dessous:

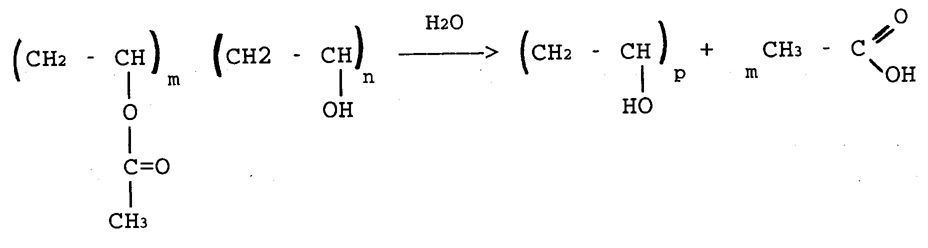

L'invention a pour objet une membrane élastique imperméable destinée à équiper un accumulateur hydropneumatique pour séparer un compartiment gaz et un compartiment liquide qui ne présente pas les inconvénients ci-dessus. Cette membrane se caractérise par le fait qu'elle est réalisée soit à partir d'un film imperméable obtenu par extrusion soit directement par injection ou moulage sous pression d'alcool polyvinylique totalement hydrolysé et de haute masse moléculaire et plastifié.

Suivant une autre caractéristique, l'hydrolyse totale de l'alcool polyvinylique est obtenue à partir du polyacétate de vinyl par la réaction: 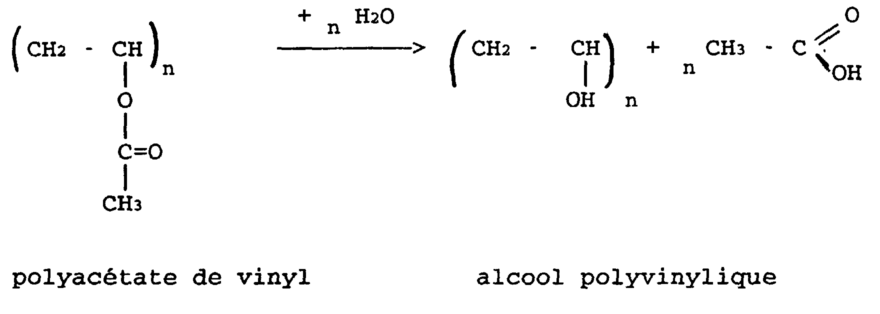 suivant encore une autre caractéristique l'alcool polyvinylique totalement hydrolysé est plastifié préférentiellement à la glycérine à un taux allant jusqu'à 35%.

On connaît par ailleurs du document 〈〈 Polyvinyl Alcohol 〉〉, C.A. Finch, John Wiley & Sons, 1973, pages 352 à 383 et 523 à 528, des films extrudés d'alcool polyvinylique totalement hydrolysés, à haute masse moléculaire et plastifiés, pouvant être utilisés en association avec des alcools polyvinyliques partiellement hydrolysés.

Le document FR-A-2 662 638, décrit également une feuille laminée comprenant une pellicule d'alcool polyvinylique, partiellement ou totalement saponifié, contenant un plastifiant du tue polyol selon un pourcentage de 15 % à 50 % en poids et une couche de feuille de caoutchouc laminée sur au moins un côté de la pellicule d'alcool polyvinylique.

Le film en alcool polyvinylique totalement hydrolysé et plastifié est extrudé en une seule opération avec une épaisseur de 450 à 1400 µm.

Selon un mode de réalisation, le film en alcool polyvinylique extrudé qui sert à confectionner la membrane est protégé sur ses deux faces par un revêtement en polyamide, en éthylène vinylalcool ou en éthylène vinylacétate obtenu par coextrusion en même temps que le film en alcool polyvinylique.

Selon un autre mode de réalisation, la membrane est obtenue par injection ou moulage sous pression, d'alcool polyvinylique totalement hydrolysé et plastifié, directement moulé à la forme et placé entre deux couches protectrices en caoutchouc.

Aussi l'invention a plus spécialement pour objet une membrane élastique imperméable destinée à équiper un accumulateur hydropneumatique pour séparer un compartiment gaz et un compartiment liquide, caractérisée en ce qu'elle comprend une monocouche d'alcool polyvinylique de haute masse moléculaire totalement hydrolysé et plastifié à la glycérine, susceptible d'être obtenue directement par injection ou moulage sous pression, présentant une épaisseur constante et contrôlée de 450 µm à 1400 µm.

Le moulage par injection se fait préférentiellement à une pression d'environ 105.10⁵ Pa (150 bars) et une température d'environ 220°C. Il présente l'avantage de fournir une membrane d'épaisseur constante et contrôlée, ce oui a pour effet d'améliorer les qualités d'imperméabilité et d'élasticité. De plus, la membrane est obtenue directement à la forme au lieu d'être confectionnée à partir d'un film. A la sortie du moule, il ne reste plus qu'à l'enduire sur les deux faces d'un adhésif approprié, de façon à assurer une adhérisation avec les deux couches de caoutchouc, elles-mêmes à la forme et entre lesquelles elle sera placée, avant vulcanisation de l'ensemble sous presse. La vulcanisation pourrait se faire par exemple à une température voisine de 155°C pendant une durée d'environ 12 minutes.

Un contrôle de la décomposition de l'alcool polyvinylique effectué par DSC (Differential Scaning Calorimetry) met en évidence les températures de décomposition suivantes:
- Alcool polyvinylique partiellement hydrolysé: : 180 - 190°C
- Alcool polyvinylique totalement hydrolysé: : 230 - 240°C

On constate que l'alcool polyvinylique totalement hydrolysé a une température de décomposition supérieure à la température utilisée pour la mise en oeuvre.
La figure 1 représente en coupe une membrane selon le procédé connu.
La figure 2 représente en coupe une membrane selon l'invention.

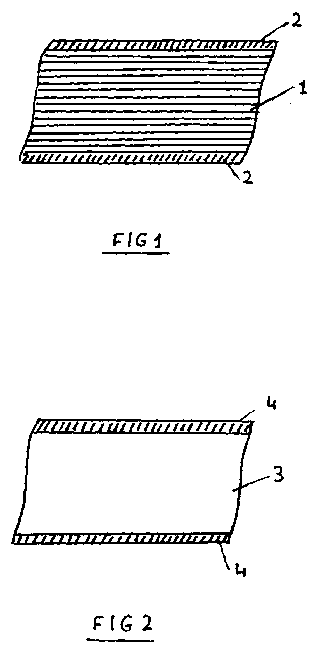

On voit sur la figure 1 une membrane obtenue par doublages successifs en laminant une pluralité de films 1 dont les épaisseurs sont voisines de 90 µm. Dans l'exemple représenté, on a superposé quatorze couches pour obtenir l'épaisseur souhaitée. L'ensemble est ensuite recouvert par laminage de deux couches protectrices 2.

On voit sur la figure 2 en coupe la membrane selon l'invention, obtenue par coextrusion d'un film 3 d'alcool polyvinylique dont l'épaisseur est de 1200 µm et de ses deux couches protectrices 4 en polyamide ou en éthylène vinylalcool ou en éthyléne vinylacétate.

Un test de perméabilité a été effectué sur diverses membranes dans des conditions identiques en appliquant une pression de 50.10⁵ Pa (50 bars) sans contre-pression sur une face de la membrane; la membrane étant en appui sur une paroi composée de billes poreuses. On mesure la chute de pression en millibars par seconde.

Ce test a donné les résultats suivants:
membrane en polyuréthane (solution connue):
   225.10⁻⁴ mbar/s*
membrane avec film extrudée (selon l'invention):
   35.10⁻⁴ mbar/s*
membrane avec film laminée (en plusieurs couches):
   35.10⁻⁴ mbar/s*
membrane avec film moulée sous pression (selon l'invention) :
   12.10⁻⁴ mbar/s*

* 1 bar = 10⁵ Pa

On constate que la meilleure imperméabilité correspond aux membranes moulées sous pression par injection.

Par rapport à la membrane laminée en plusieurs couches, la membrane extrudée ou coextrudée avec son revêtement protecteur

présente une imperméabilité équivalente. Cependant, l'avantage réside dans le coût réduit de fabrication puisque le film d'épaisseur souhaitée et son revêtement protecteur sont obtenus en une seule opération par coextrusion.

## Revendications

1. Membrane élastique imperméable destinée à équiper un accumulateur hydropneumatique pour séparer un compartiment gaz et un compartiment liquide, caractérisée en ce qu'elle comprend une monocouche d'alcool polyvinylique de haute masse moléculaire totalement hydrolysé et plastifié à la glycérine, susceptible d'être obtenue directement par injection ou moulage sous pression, présentant une épaisseur constante et contrôlée de 450 µm à 1400 µm.

2. Membrane selon la revendication 1, caractérisée en ce que l'hydrolyse totale de l'alcool polyvinylique est obtenue selon la réaction :

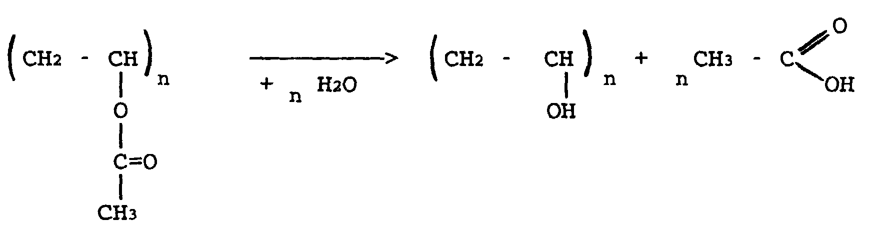

3. Membrane selon la revendication 2, caractérisée en ce que l'alcool polyvinylique totalement hydrolysé est plastifié à la glycérine à un taux allant jusqu'à 35 %.

4. Membrane selon la revendication 3, caractérisée en ce qu'elle est obtenue par injection ou moulage sous pression d'alcool polyvinylique totalement hydrolysé et plastifié directement moulé à la forme.

5. Membrane selon la revendication 4, caractérisée en ce qu'elle est moulée sous une pression d'environ 150.10⁵ Pa (150 bars) et à une température d'environ 220 °C.

6. Membrane selon la revendication 5, caractérisée en ce qu'elle est enduite d'un adhésif approprié destiné à l'adhériser sur du caoutchouc.

7. Membrane selon la revendication 6, caractérisée en ce qu'elle est placée entre deux couches de caoutchouc protectrices elles-mêmes à la forme puis vulcanisé sous presse environ 12 minutes à 155 °C.

## Claims

1. Impermeable elastic membrane intended to be fitted to a gas-loaded accumulator in order to separate a gas compartment and a liquid compartment, characterised in that it comprises a monolayer of polyvinyl alcohol of high molecular mass, totally hydrolysed and plasticised with glycerine, capable of being obtained directly by injection or pressure moulding, having a constant, controlled thickness of 450 µm to 1400 µm.

2. Membrane according to Claim 1, characterised in that the total hydrolysis of the polyvinyl alcohol is obtained by the reaction:

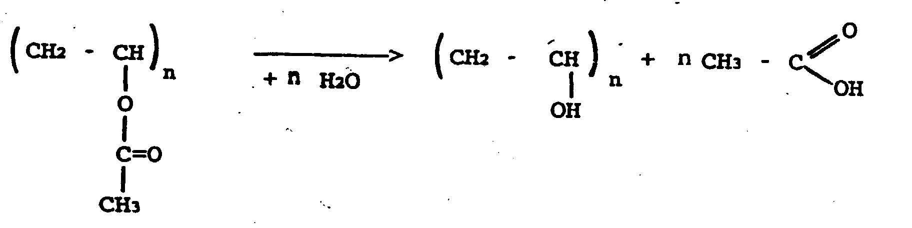

3. Membrane according to Claim 2, characterised in that the totally hydrolysed polyvinyl alcohol is plasticised with glycerine at a rate of up to 35%.

4. Membrane according to Claim 3, characterised in that it is obtained by injection or pressure moulding of polyvinyl alcohol, totally hydrolysed and plasticised, directly form-moulded.

5. Membrane according to Claim 4, characterised in that it is moulded at a pressure of about 150.10⁵ Pa (150 bars) and at a temperature of about 220°C.

6. Membrane according to Claim 5, characterised in that it is coated with an appropriate adhesive intended to adhere to rubber.

7. Membrane according to Claim 6, characterised in that it is placed between two protective layers of rubber themselves formed, and it is then vulcanised in a press for about 12 minutes at 155°C.

## Patentansprüche

1. Undurchlässige, elastische Membran, die zur Ausrüstung von hydropneumatischen Akkumulatoren vorgesehen ist, um ein Gas-Compartment von einem Flüssigkeits-Compartment zu trennen, dadurch gekennzeichnet, daß sie eine Schicht aus vollständig hydrolysiertem und mit Glycerin weichgemachtem Polyvinylalkohol mit großer Molekularmasse enthält, die durch Spritzgießen oder Pressformen hergestellt werden kann, die eine gleichmäßige und kontrollierte Dicke von 450 bis 1400 µm aufweist.

2. Membran nach Anspruch 1, dadurch gekennzeichnet, daß die vollständige Hydrolyse zum Polyvinylalkohol gemäß der folgenden Reaktion

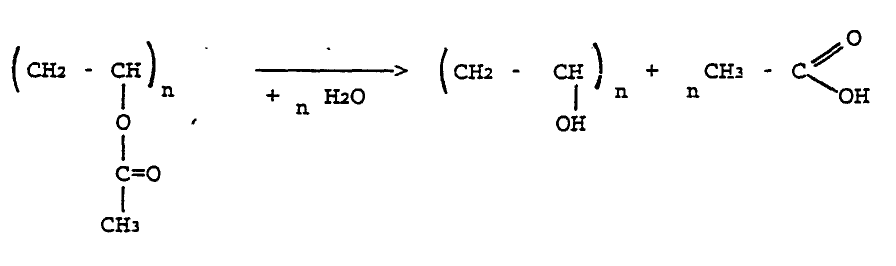

3. Membran nach Anspruch 2, dadurch gekennzeichnet, daß der vollständig hydrolysierte Polyvinylalkohol mit Glycerin in einem Anteil von bis zu 35 % weichgemacht ist.

4. Membran nach Anspruch 3, dadurch gekennzeichnet, daß sie durch Spritzgießen oder Pressformen von weichgemachtem und vollständig hydrolysiertem Polyvinylalkohol hergestellt ist, der durch Formgebung unmittelbar in die gewünschte Form gebracht wird.

5. Membran nach Anspruch 4, dadurch gekennzeichnet, daß sie bei einem Druck von etwa 150·10⁵ Pa (150 bar) und einer Temperatur von etwa 220 °C geformt ist.

6. Membran nach Anspruch 5, dadurch gekennzeichnet, daß sie mit einem geeigneten Klebstoff bestrichen ist, der für das Verkleben der Membran mit Kautschuk vorgesehen ist.

7. Membran nach Anspruch 6, dadurch gekennzeichnet, daß sie zwischen zwei Schutzschichten aus Kautschuk, die selbst die gewünschte Form aufweisen, angeordnet wird, wonach unter Druck etwa 12 min bei 155 °C vulkanisiert wird.
